# EUROPÄISCHE PATENTANMELDUNG

(11) **EP 1 272 005 A2**
(43) Veröffentlichungstag der Anmeldung: **02.01.2003**
(21) Anmeldenummer: 02013897.0
(22) Anmeldetag: 24.06.2002
(51) Int. Cl.: H05B 1/02

(54) **Regelmodul zur Regelung zu mindestens einer elektrischen Heizeinrichtung**

(30) Priorität: 25.06.2001 AT 9692001
(71) Anmelder: Rapp, Bernhard, 6020 Innsbruck (AT)
(72) Erfinder: Rapp, Bernhard, 6020 Innsbruck (AT)
(74) Vertreter: Torggler, Paul Norbert, Dr.

(57) **Zusammenfassung**

Regelmodul (1) zur Regelung einer Stromzufuhr zu mindestens einer elektrischen Heizeinrichtung (3), wobei die Stromzufuhr in einer zeitlichen Abfolge insbesondere periodisch in Abhängigkeit eines Regelsignals an- und ausschaltbar ist, wobei das Regelsignal von der Stromzufuhr elektrisch potentialfrei getrennt ist.

## Beschreibung

Die vorliegende Erfindung betrifft ein Regelmodul zur Regelung einer Stromzufuhr zu mindestens einer elektrischen Heizeinrichtung, wobei die Stromzufuhr in einer zeitlichen Abfolge insbesondere periodisch in Abhängigkeit eines Regelsignals an- und ausschaltbar ist.

Gattungsgemäße Steuermodule sind beim Stand der Technik bekannt und dienen zum Regeln elektrischer Leistungen von Heizeinrichtungen im Bereich von Heizungsanlagen. Das Grundprinzip dieser gattungsgemäßen Regelmodule ist es, die Stromzufuhr zur Heizeinrichtung abwechselnd an- und abzuschalten. Die Länge der An- und Abschaltzeiten wird hierbei in Abhängigkeit eines Regelsignals eingestellt. Eine gattungsgemäße Regeleinrichtung ist z.B. aus der DE 19948313 A1 bekannt. In dieser Schrift wird eine Pulsweitensteuerung gezeigt, bei der durch Einstellung der jeweiligen Dauer der Strompulse sowie der zeitlichen Abfolge der Strompulse eine flexible Ansteuerung der Heizung erreicht wird.

Der Nachteil aller beim Stand der Technik bekannten gatttungsgemäßen Regelmodule ist es, daß nicht beliebig kleine An- und Abschaltzeiten realisiert werden können, da es bei entsprechend kleinen An- und Abschaltzeiten bzw. bei entsprechend hoher Schaltfrequenz zu ungewünschten Rückkoppelungen in die Stromzufuhr bzw. die Spannungsversorgung kommt. Diese sogenannten Netzflicker sind besonders dann zu vermeiden, wenn als Stromzufuhr ein öffentliches Netz, wie z.B. das 230 Volt Wechselspannungsnetz verwendet wird.

Aufgabe der vorliegenden Erfindung ist es somit, ein Regelmodul zu schaffen, bei dem auch sehr kleine Ein- und Ausschaltzeiten bzw. hohe Schaltfrequenzen unter Vermeidung der oben genannten Nachteile möglich sind.

Dies wird erfindungsgemäß dadurch erreicht, daß das Regelsignal von der Stromzufuhr elektrisch potentialfrei getrennt ist.

Durch die erfindungsgemäße potentialfreie Trennung wird sichergestellt, daß auch bei hohen Schaltfrequenzen bzw. kurzen Ein- und Ausschaltzeiten keine Störsignale in die Stromzufuhr eingekoppelt werden. Dadurch können auch sehr kurze Ein- und Ausschaltzeiten realisiert werden.

Eine günstige Variante sieht vor, daß das Regelmodul zur elektrisch potentialfreien Trennung von Regelsignal und Stromzufuhr mindestens einen Optokoppler aufweist. Durch die Verwendung eines Optokopplers ist die potentialfreie Trennung von Regelsignalen und Stromzufuhr einfach und unter Vermeidung von ungewünschten Rückkoppelungen des Regelsignals in die Stromzufuhr möglich.

Als Regelsignal kann eine elektrische Spannung, wie z.B. eine von einem Thermostat, vorzugsweise Proportional-Regler-Thermostat abgegebene Gleichspannung verwendet werden.

Wenn die Stromzufuhr mit einer Wechselspannung insbesondere mit dem 230 Volt Wechselspannungsnetz betreibbar ist, ist es günstig, daß das Regelmodul mindestens einen vom Regelsignal angesteuerten Leistungsschalter zum An- und Ausschalten der Stromzufuhr zu der elektrischen Heizeinrichtung aufweist, wobei der Leistungsschalter die Stromzufuhr im Nulldurchgang der Wechselspannung an- oder ausschaltet. Durch das An- und Ausschalten im Nulldurchgang wird verhindert, daß sich das Regelmodul unnötig aufgrund von Restströmen oder Restspannungen aufheizt. Als Leistungsschalter wird hierbei in einer günstigen Ausführungsform ein Thyristor verwendet.

Zur Bestimmung der Ein- und Ausschaltzeiten sieht eine günstige Ausführungsform vor, daß das Regelmodul einen Taktgenerator zur Bereitstellung einer Sägezahnspannung und einen Komparator zum Vergleich der Steuerspannung mit der Sägezahnspannung aufweist, wobei die An- und Ausschaltzeiten der Stromzufuhr aus dem Vergleich von Sägezahnspannung und Steuerspannung bestimmbar sind. Darüber hinaus ist es zusätzlich günstig, wenn das Regelmodul einen Schwellwertschalter, vorzugsweise ein Potentiometer, zur Einstellung eines Schwellwertes aufweist, wobei die Stromzufuhr nicht eingeschaltet wird, wenn das Regelsignal kleiner oder gleich dem einstellbaren Schwellwert ist. Hierdurch ist eine manuelle Anpassung der Regelung an die speziellen und auch momentanen Wünsche des Benutzers möglich. Günstige Varianten des Regelmoduls sehen darüber hinaus vor, daß eine Zyklusdauer der Stromzufuhr zwischen 0 Sekunden und 5 Minuten einstellbar ist und/oder daß die Schaltzeiten zwischen 0 Sekunden und 60 Sekunden einstellbar sind.

Weitere Merkmale und Einzelheiten der vorliegenden Erfindung ergeben sich aus der nachfolgenden Figurenbeschreibung. Dabei zeigt:
- Fig. 1: eine schematische Darstellung einer erfindungsgemäßen Ausführungsvariante,
- Fig. 2: eine mögliche Ausführungsform eines Verdrahtungsplans zur Realisierung der in Fig. 1 gezeigten Ausführungsvariante und
- Fig. 3: eine schematische Außenansicht auf die erfindungsgemäße Ausführungsvariante aus Fig. 1.

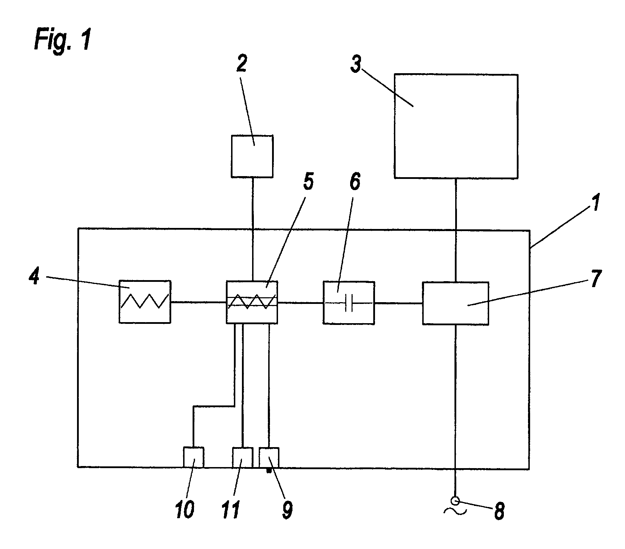

Das in Fig. 1 schematisch dargestellte Regelmodul 1 kann z.B. zur Regelung für elektrische Heizungen vorzugsweise Direktheizungen im 1-Phasen-Betrieb mit einer maximalen Aufnahmeleistung bis zu 3 KW bei einer Betriebsspannung von 230 Volt AC (Wechselspannung) verwendet werden. Die Betriebsspannung wird in Fig. 1 über den Anschluß 8 in das Regelmodul 1 eingespeist. Günstigerweise wird der Regelmodul 1 von einem Proportional-Regler-Thermostat 2 angesteuert. Das Proportional-Regler-Thermostat 2 gibt günstigerweise bei einer Betriebsspannungsversorgung von 24 Volt eine von der Umgebungstemperatur abhängige Regelspannung (= Regelsignal) zwischen 0 und 10 Volt DC (Gleichspannung) an das Regelmodul 1 ab. Hierbei wird ein Regelsignal von 10 Volt DC vom Regelmodul als 100 % Regelung interpretiert. Dies bedeutet, daß die Stromzufuhr zur elektrischen Heizung 3 ausgeschaltet bleibt und diese permanent mit Strom versorgt wird. Ein Regelsignal von 0 Volt DC wird hingegen als vollständige Abschaltung gewertet.

Das Regelmodul 1 weist eine hier nicht genauer dargestellte DC (Gleichstrom) Versorgung mit 24 Volt mit einer beispielsweise maximalen Stromtragfähigkeit von 20 mA bis 100 mA vorzugsweise 50 mA auf. Die Versorgungsspannung von 24 Volt DC ist vom 230 Volt AC (Wechselstrom) Netz 8 potentialfrei getrennt und liegt in ihrer Spannungslage in der Klasse der Sicherheitskleinspannungen. Diese Betriebsspannung wird auch für die Versorgung des Proportional-Regler-Thermostat 2 verwendet. Das Regelmodul 1 weist einen kontaktlosen Leistungsschalter 7 auf. Dieser dosiert die elektrische Leistung bzw. die Stromzufuhr für die angeschlossene Heizung 3. Dies geschieht durch Pulspausensteuerung mit einer Zyklusdauer von 0 Sekunden bis zu 5 Minuten und Schaltzeiten zwischen 0 Sekunden und 60 Sekunden. Hierbei ist günstigerweise die Anzahl der Schaltperioden des Leistungsteils in der Minute festgelegt. Das Einschaltverhältnis bzw. die Dauer der Perioden in denen die Stromzufuhr zur Heizung 3 an- bzw. abgeschaltet ist, wird mittels des Regelsignals, welches vom Proportional-Regler-Thermostat 2 abgegeben wird, festgelegt.

Zur Bestimmung der Dauer der An- und Abschaltzeiten weist das Regelmodul 1 einen Taktgenerator 4 auf. Dieser erzeugt eine Dreiecksspannung mit einer Frequenz zwischen 0 und 10 Hertz. Diese Dreiecksspannung wird im Komparator 5 mit der vom Proportional-Regler-Thermostat 2 abgegebenen Regelspannung verglichen. Hierbei gibt der Komparator 5 ein Steuersignal zum Anschalten der Stromzufuhr zu den Zeiten ab, wenn der Spannungswert der vom Taktgenerator 4 abgegebenen Dreiecksspannung kleiner als die vom Proportional-Regler-Thermostat 2 abgegebene Regelspannung ist. Ausgeschaltet wird die Stromzufuhr, wenn die momentanen Spannungswerte der Dreiecksspannung über der Regelspannung liegen. Zusätzlich kann das Regelmodul 1 noch einen Schwellwertschalter 9 (z.B. ein Einstellpotentiometer) aufweisen, über den eine Schwellwertspannung zwischen 0 und 5 Volt DC (Gleichstrom) eingestellt werden kann. Die Schwellwertspannung wird im Komparator 5 ebenfalls mit der vom Proportional-Regler-Thermostat abgegebenen Regelspannung verglichen. Ist die Regelspannung größer als die eingestellte Schwellwertspannung und die momentane Spannung der Dreiecksspannung des Taktgenerators 4, so sorgt der Komparator 5 für ein Einschalten der Stromzufuhr zur Heizung 3 mittels des Leistungsschalters 7. Dieser ist günstigerweise als Thyristor ausgebildet.

Das Steuersignal vom Komparator 5 wird zum Leistungsschalter 7 erfindungsgemäß mittels eines Optokopplers 6 potentialfrei übertragen. Der Leistungsschalter 7 schaltet jeweils im Nulldurchgang der anliegenden Netzspannung 8. Hierdurch werden Funkstörungen vermieden. Erhöht sich nun bei fallender Raumtemperatur die Regelspannung des Thermostates, so ergibt sich über den Vergleich mit der vom Taktgenerator 4 abgegebenen Dreiecksspannung eine Verlängerung der Einschaltimpulse für die Stromzufuhr. Bei einer Regelspannung von 10 Volt DC sind die Enschaltimpulse bereits so lang, daß zwischen ihnen nicht mehr ausgeschaltet wird. Dies entspricht einer 100 %igen Einschaltdauer. Die Heizung wird vollphasig geregelt. Nach unten ist die Regelbarkeit durch den vorzugsweise als Einstellpotentiometer 9 ausgebildeten Schwellwertschalter einstellbar.

An dem Einstellpotentiometer kann man die Einschalt-Ansprechschwelle variieren. Falls eine Heizung in bestimmter Situation überdimensioniert scheint, ist es möglich, die Einschaltschwelle verzögert schalten zu lassen, d.h. wenn der Thermostat bereits eine Spannung von bis zu 5 V - abgibt, kann man durch Rechtsdrehen des Reglers die Heizung erst dann aktivieren. Bei Linksanschlag spricht sie sofort an.

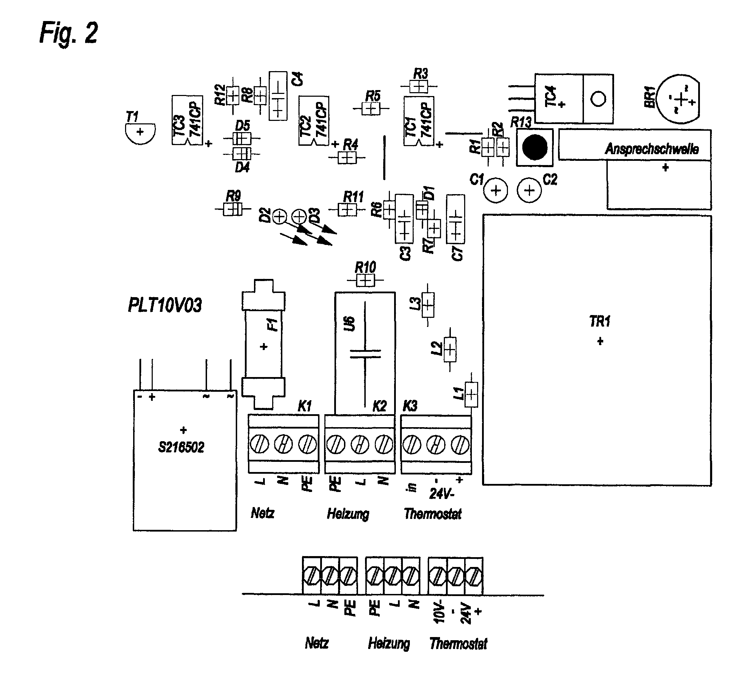

Fig. 2 zeigt einen Verdrahtungsplan, in dem der in Fig. 1 gezeigte schematische Aufbau des Ausführungsbeispiels als Schaltung realisiert ist. Wichtig ist es hierbei festzuhalten, daß der Steuerungseingang Klemme "in" im Minimum 6 mA bis 15 mA aufnimmt.

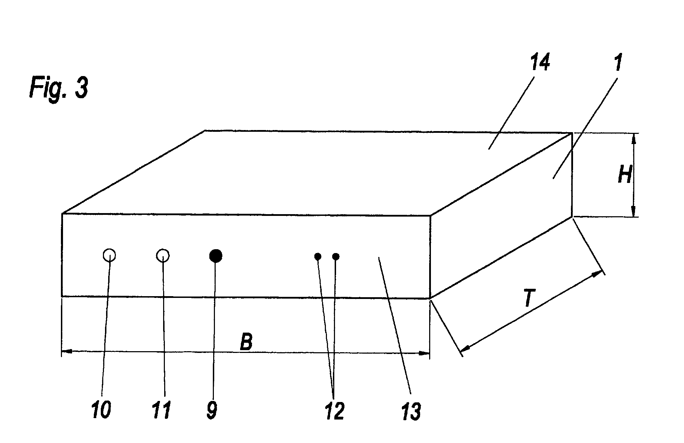

In Fig. 3 ist eine perspektivische Ansicht von vorne auf die Frontplatte 13 des Regelmoduls 1 gezeigt. Auf der Frontplatte 13 befinden sich zwei Anzeigen 10 und 11. Die grüne Anzeige 10 zeigt die Betriebsbereitschaft des Regelmoduls 1 an. Die rote Anzeige 11 leuchtet so lange, wie die Einschaltimpulse für die Stromzufuhr der Heizung sind. In den Perioden, in denen die Stromzufuhr zur elektrischen Heizung 3 ausgeschaltet ist, leuchtet die rote Anzeige 11 nicht. Im 100 %igen Einschaltzustand leuchtet die rote Anzeige 11 stetig. In den Regelzuständen zwischen dem vollständigen Anschalten und dem vollständigen Ausschalten der Stromzufuhr blinkt sie entsprechend der Länge der Einschaltimpulse, in denen die Stromzufuhr zur Heizung 3 eingeschaltet ist.

Die Elektronik des Regelmoduls 1 ist in einem Alugehäuse 14 untergebracht. Dieses weist günstigerweise eine Größe zwischen 100 x 100 x 20 mm und 200 x 200 x 40 mm (Tiefe T x Breite B x Höhe H). Die Bodengrundplatte des Alugehäuses 14 wird günstigerweise als Kühlkörper verwendet. Alternativ zum Aluminium kann für das Gehäuse 14 auch Edelstahl oder anderes wärmeleitfähiges Material verwendet werden. Die Höhe H des Regelmoduls liegt günstigerweise zwischen 20 und 35 mm. Die Befestigung des Regelmoduls 1 erfolgt an der Wand, an den hierfür vorgesehenen Bohrungen in unmittelbarer Nähe des Heizkörpers. Das Regelmodul 1 kann jedoch auch direkt auf Putz hinter einem Direktheizkörper 3 montiert werden. Die in der Frontplatte 13 angebrachten Kontrollanzeigen 10 und 11 dienen zur Kontrolle der einwandfreien Funktion des Regelmoduls 1. Die Anschlußklemmen befinden sich günstigerweise an der Unterseite des Gehäuses 14. Darüber hinaus kann günstigerweise eine Zugentlastung an der Platine (hier nicht dargestellt) montiert sein.

### Technische Daten:

Betriebsspannung 24 V ∼ ± 5 %
Lastteilspannung (Netz) 230 V ± 10 %
Frequenz 50 HZ
Steuersignal 0-10V
Stromaufnahme max. 15 mA
Schaltleistung max. 3,0 KW bzw. 11 A (entspricht 2,5 KW)
PWM 0/300 sec.
Maximale Innentemperatur: 105°C
Minimale Temperatur: -40°C
Schutzklasse I: Schutzkontakt PE Potential Erde
Zugentlastung: mittels Kabelbinder
Anforderung bei Verwendung von Schmelzsicherungen: nur superflinke Type mit Aufdruck 10 A

## Patentansprüche

1. Regelmodul zur Regelung einer Stromzufuhr zu mindestens einer elektrischen Heizeinrichtung, wobei die Stromzufuhr in einer zeitlichen Abfolge insbesondere periodisch in Abhängigkeit eines Regelsignals an- und ausschaltbar ist, **dadurch gekennzeichnet, daß** das Regelsignal von der Stromzufuhr elektrisch potentialfrei getrennt ist.

2. Regelmodul nach Anspruch 1, **dadurch gekennzeichnet, daß** das Regelmodul (1) zur elektrisch potentialfreien Trennung von Regelsignal und Stromzufuhr mindestens einen Optokoppler (6) aufweist.

3. Regelmodul nach einem der Ansprüche 1 oder 2, **dadurch gekennzeichnet, daß** das Regelsignal eine elektrische Spannung ist.

4. Regelmodul nach einem der Ansprüche 1 oder 2, **dadurch gekennzeichnet, daß** das Regelsignal eine von mindestens einem Thermostat (2), vorzugsweise Proportional - Regler - Thermostat, abgegebene Gleichspannung ist.

5. Regelmodul nach einem der Ansprüche 3 oder 4, **dadurch gekennzeichnet, daß** das Regelmodul (1) einen Taktgenerator (4) zur Bereitstellung einer Sägezahnspannung und einen Komparator (5) zum Vergleich der Steuerspannung mit der Sägezahnspannung aufweist, wobei die An- und Ausschaltzeiten der Stromzufuhr aus dem Vergleich von Sägezahnspannung und Steuerspannung bestimmbar sind.

6. Regelmodul nach einem der Ansprüche 1 bis 5, wobei die Stromzufuhr mit Wechselspannung, insbesondere mit dem 230 Volt Wechselspannungsnetz, betreibbar ist, **dadurch gekennzeichnet, daß** das Regelmodul (1) mindestens einen vom Regelsignal angesteuerten Leistungsschalter (7) zum An- und Ausschalten der Stromzufuhr zu der elektrischen Heizeinrichtung (3) aufweist, wobei der Leistungsschalter (7) die Stromzufuhr im Nulldurchgang der Wechselspannung (8) an- oder ausschaltet.

7. Regelmodul nach Anspruch 6, **dadurch gekennzeichnet, daß** der Leistungsschalter (7) ein Thyristor ist.

8. Regelmodul nach einem der Ansprüche 1 bis 7, **dadurch gekennzeichnet, daß** das Regelmodul einen Schwellwertschalter (9), vorzugsweise ein Potentiometer, zur Einstellung eines Schwellwertes aufweist, wobei die Stromzufuhr nicht eingeschaltet wird, wenn das Regelsignal kleiner oder gleich dem einstellbaren Schwellwert ist.

9. Regelmodul zur Regelung einer Stromzufuhr zu mindestens einer elektrischen Heizeinrichtung, wobei die Stromzufuhr in einer zeitlichen Abfolge insbesondere periodisch in Abhängigkeit eines Regelsignals an- und ausschaltbar ist, insbesondere nach einem der Ansprüche 1 bis 8, **dadurch gekennzeichnet, daß** eine Zyklusdauer der Stromzufuhr zwischen 0 Sekunden und 5 Minuten einstellbar ist.

10. Regelmodul zur Regelung einer Stromzufuhr zu mindestens einer elektrischen Heizeinrichtung, wobei die Stromzufuhr in einer zeitlichen Abfolge insbesondere periodisch in Abhängigkeit eines Regelsignals an- und ausschaltbar ist, insbesondere nach einem der Ansprüche 1 bis 9, **dadurch gekennzeichnet, daß** Schaltzeiten zwischen 0 Sekunden und 60 Sekunden einstellbar sind.
